# EUROPEAN PATENT SPECIFICATION

(11) **EP 2 700 582 B1**
(45) Date of publication and mention of the grant of the patent: **31.08.2016**
(21) Application number: 13005446.3
(22) Date of filing: 04.06.2009
(51) Int. Cl.: B65D 1/24, B29C 45/14, B29C 45/16, B29L 31/00

(54) **Container provided with markings**
Mit Kennzeichnungen ausgestatteter Behälter
Récipient pourvu de marquages

(30) Priority: 04.07.2008 EP 08159672
(43) Date of publication of application: 26.02.2014
(62) Divisional of application: 09772256.5
(73) Proprietor: DW Plastics N.V., Bilzen, 3740 (BE)
(72) Inventor: Willems, Gert Louis Clément, B-3990 Wilsele (BE)
(74) Representative: Benech, Frédéric

(56) References cited:
- EP-A- 1 008 527
- EP-A- 1 595 799
- EP-A- 1 710 069
- EP-A2- 0 743 166
- DE-A1- 19 613 494
- DE-A1- 19 844 183
- FR-A- 2 879 955
- US-A1- 2005 053 737
- US-A1- 2007 132 122

## Description

The present invention relates to a bottle crate, provided with markings. More in particular, the present invention relates to a bottle according to the preamble of claim 1.

It is well known to provide markings, such as a brand name or product name, on the side walls of a container. British Patent GB 868,638 (The Richardson Company), for example, discloses a moulded plastic bottle carrying case, the side walls of which are provided with raised advertising indicia which may be painted to enhance their visibility. As said British Patent already acknowledges, paint is susceptible to abrasion and as a result, the markings will gradually become less visible and hence less affective. A protective rim is therefore provided on the side walls in an attempt to protect the raised indicia from abrasion. So-called in-moulded labels as disclosed in, for example, WO 00/42591 (D W Plastics), suffer from the same drawback.

European Patent Application EP 0 490 165 (Peguform-Werke) discloses a bottle crate in which indicia are provided by means of an in-moulded insert which is embedded in a handle section of the crate body. The insert is provided with spacer elements (in German: "Abstandsnoppen") for positioning the insert in the mould during the moulding of the crate body. The spacer elements, which have different cross-sectional shapes such as a square, a cross or a circle, are visible from outside the moulded crate and form an identification which may represent certain information, such as the name of the manufacturer or the date of manufacture. It is noted that the indicia disclosed in EP 0 490 165 are symbols, not characters.

European Patent Application EP 1 595 799 (D.W. Plastics), which accords with the preamble of claim 1, discloses a bottle crate comprising side walls and visible markings, such as a brand, on said one or more side wall. The marking is provided by a marking element which is partly embedded in a recess of an already (first) moulded layer forming a crate body. Next, a second layer is moulded partly over the already moulded layer and partly over the marking element This bottle crate requires a second moulding step.

Furthermore, in this and most methods stress occurs when using different materials. Another problem is bleeding of material in the moulding material.

EP-1.710.069 Discloses a bottle crate having side walls provided with an in-mould label (IML) and an overmoulded protection element. The IML has unprinted edges which extend at least as far as the protection element. The protection element projects above the surface of the side wall. Furthermore, the protection element requires an additional overmoulding step. The IML has a base layer which is provided with printing.

US-2005/053737 and US-2007/132122 disclose a cup provided with a "lenticular lens sheet insert". The insert is provided with printing on its back side. In order to protect the ink layer, a protective substrate is applied and bonded to the printed ink layer. The insert including protective layer is inserted into a mould. When injecting plastic material for forming the cup, the outer layer of the protective layer melts and thus forms a bonding interface. A problem of bleeding over the lenticular sheet material is identified. This is solved by providing the insert with ridges or raised portions. Furthermore, distortion of the lens material should be avoided. The specific method is clearly intended for cups. It is not suited for any type containers in general, in particular not for bottle crates, for instance.

FR-2.879.955 discloses an injection moulded container having inlays integrated in the walls.

It is an object of the present invention to overcome these and other problems of the Prior Art. The invention is defined by a bottle crate according to claim 1. Preferred embodiments are defined by dependent claims 2 to 8.

By using the specified insert, the disadvantages of the prior art can be overcome. In fact, the embedded base layer provides that the marking element is well attached to a bottle crate. Furthermore, this insert allows very detailed markings to be made. The moulds for making the container can remain unmodified.

In this respect, the fact that the marking extend at least partially from the rest of the side wall in this respect means that the marking extends relatively from the surrounding wall of the container. At least in the surrounding of the marking, the marking thus extends from the further container wall.

In certain embodiments, the base layer and the container body are made of the same plastic material, for example HDPE (High Density PolyEthylene) or any other suitable material. In these embodiments, the base layer may have the same colour as the crate body, thus being inconspicuous while still providing the advantages of a flexible production. In fact, the insert is in particular suited for a bottle crate. These types of containers are often under harsh conditions and suffer rough treatment.

In an embodiment, the surface of the marking is in-plane with the surface of the side wall in which it is provided.

In an embodiment, said base layer and the container body are made of the same plastic material and comprise substantially the same colour pigments.

In an embodiment, the base layer and the container body are made of different plastic materials, the base layer preferably being made of a plastic material which is softer than the plastic material of the container body, in an embodiment the container body is substantially made from HDPE, and the base layer is substantially made from LDPE.

In an embodiment, the base layer and the container body are made of different plastic materials, the base layer preferably being made of a plastic foil material which is softer than the plastic material of the container body, and is substantially without colour pigments.

In an embodiment, the at least one marking element indicates a brand, type and/or number.

The insert and the marking elements are further described.

Although the markings could show a design or symbol, it is preferred that the at least one marking element indicates a brand, type and/or number. If the container is a bottle crate for carrying beer bottles, for example, the markings could indicate the name of the brewer, the type of beer and/or the number and size of the bottles (for example "24 x 0.5"). Of course several marking elements could be provided in a single container, each marking element showings a brand, type and/or number.

In an embodiment, at least one marking element is arranged at a handle section. This allows the markings to be present in highly visible parts of the container. In addition, the marking elements may be used to reinforce the handle sections, thus obtaining an additional benefit.

Prior to moulding the container, the marking element may be held to the mould wall by suitable tools. In an embodiment, the area of the mould where a marking element is to be applied is provided with holding means for holding the marking element. Such holding means may comprise grooves, ridges, pins or other suitable mechanical means for holding the marking element in its designated position prior to and during the moulding of the container. The marking element itself may also be provided with holding means, which then cooperate with holding means provided on the mould wall. In an embodiment, the holding means are constituted by a recess in the mould wall, shaped in such a way that the marking element may be snap-fitted in the recess.

In an embodiment, the area of the mould where the marking element is to be applied is provided with channels for passing the material of the layer. Such channels allow the layer material, when liquid during the moulding process, to flow to the other side of the marking element. In this way, a more complete embedding of the marking element may be achieved. The channels can be defined by undulations of the area where the marking element is to be applied. However, the channels may also be constituted by grooves in the area surface. It is also possible to provide the insert with such channels or undulations.

The container according to the present invention is in a embodiment a bottle crate. Such a crate may be provided with dividers for separating any bottles. Other types of containers may also be envisaged, such as trays and pallets, but they do not form part of the invention.

The present invention offers the significant advantage of providing lasting markings that can be applied easily in the production process.

In addition to a greater freedom of design, the present invention also reduces the cycle time (per unit production time) of the container body.

It will be understood that markings according to the present invention may be located at virtually any part of the wall of a crate.

A method of providing a container with markings, comprises the steps of:
- providing an insert having a base layer and markings on said base layer,
- positioning the insert in a mould, with the surface of said markings against a mould wall, and
- moulding the container body so as to embedded at least the base layer of the insert while exposing at least the surface of the markings

The present invention will further be explained below with reference to exemplary embodiments illustrated in the accompanying drawings, in which is shown:
Figure 1 schematically, in perspective view, a container according to the present invention;
Figure 2 schematically a view of the front of an insert which does not form part of the invention for the container of figure I in more detail;
Figure 3 schematically a view of the back of an insert which does not form part of the invention for the container of figure 1 in more detail;
Figure 4 a cross section of the insert of figure 2 in a container wall;
Figure 4a an insert which does not form part of the invention having markings extending from the wall of a container;
Figure 5 coupling of part of a first part of a marking on a base layer;
Figure 6 a cross section through a part of an insert having a first and second marking parts, and
Figure 7 an insert having first and second marking parts.

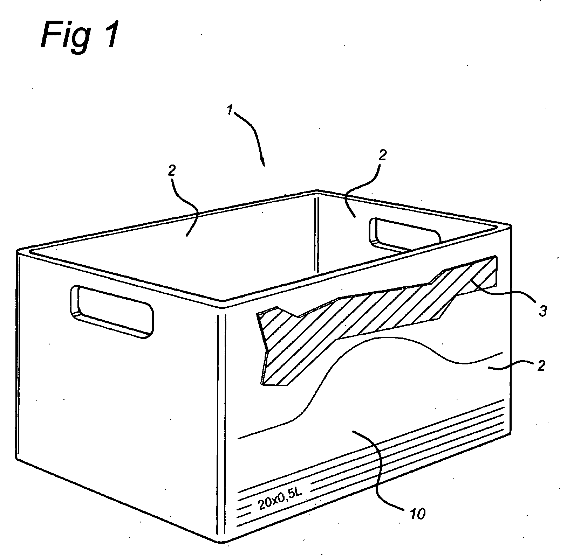

The crate 1 shown merely by way of non-limiting example in Fig. 1 comprises a crate body that consists of a base and side walls 2 extending from the base. The crate 1 may thus have four side walls 2 enclosing an inner space in which bottles may be accommodated, thus providing a bottle crate. The inner space (not shown) may be provided with dividers for forming bottle compartments. In this embodiment, aside wall 2 is provided with a marking 3. This marking can be a logo, characters, or other information or decoration.

The crate body (base and walls 2) are for example made of thermoplastic material which can be injection moulded. Often used materials include HDPE and polypropylene (PP).

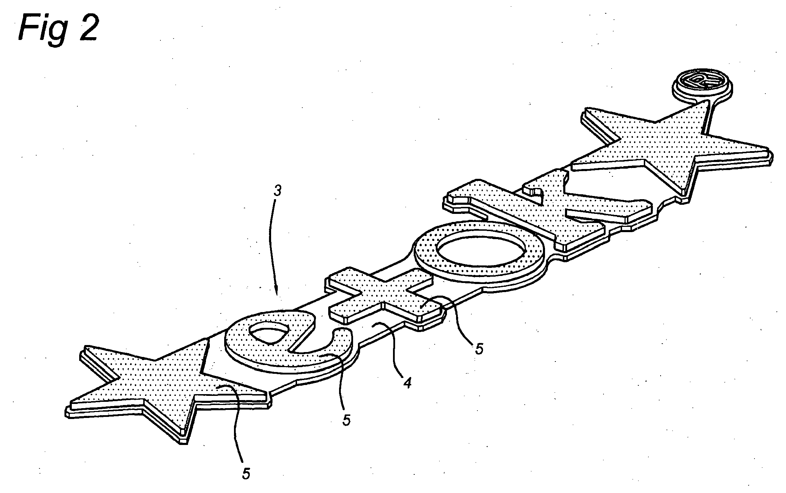

Figure 2 shows a front view of an insert 3. This insert 3 has markings 5. These markings 5 are made of a material which is scratch resistant and which has an attractive appearance. Usually, HDPE is used in a quality which provides these properties, or polypropylene. Another plastic material, in particular thermoplastic material, may also be used.

The markings 5 are very well attached to a base layer 4. In fact, in most embodiments they are integrated in this base layer 4. The surface of the markings 5 should be visible on the outside of wall 2. Usually, the surface of the markings 5 are in one plane with the surface of wall 2 in which the insert 3 is integrated. It may, however, also be possible to allow the markings 5 to come out of the wall at least a little. Alternatively, they may be a little withdrawn.

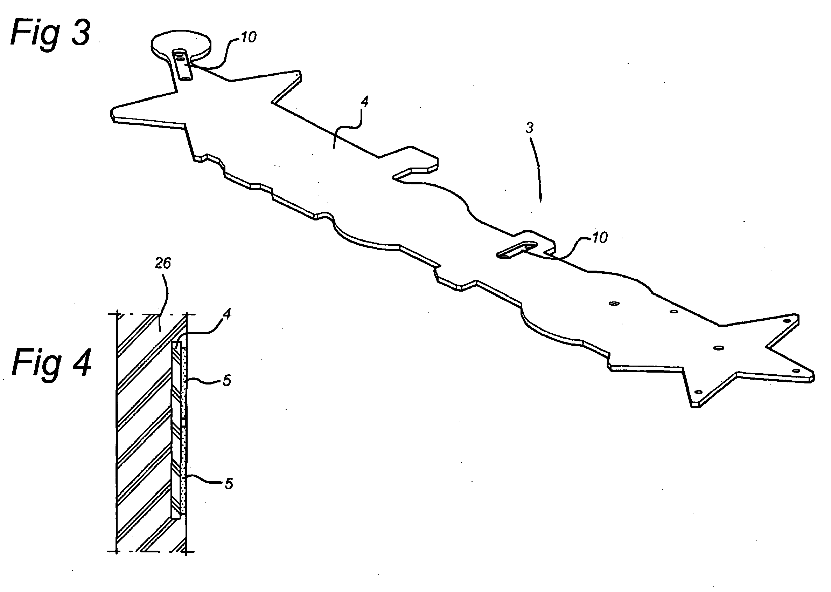

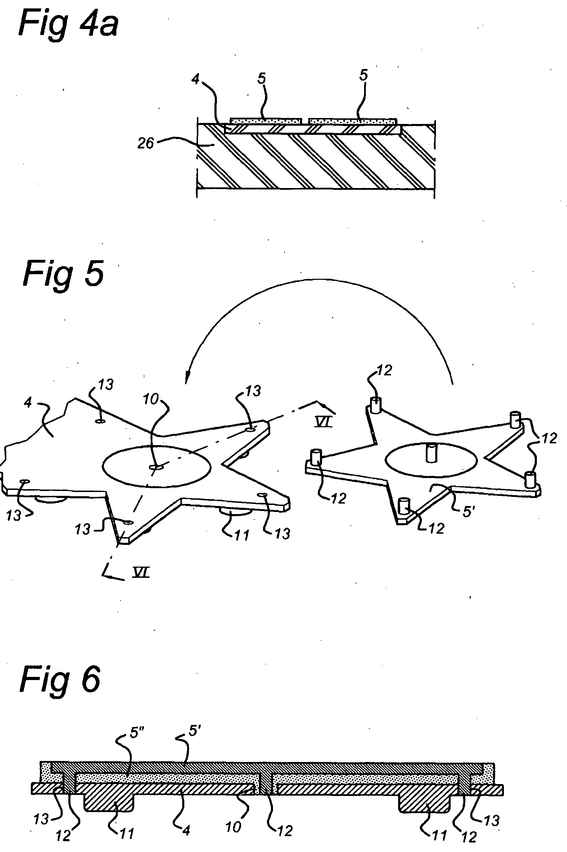

Figure 3 shows the back of an embodiment of insert 3. In this embodiment, the markings 5 have parts extending from the back and further into the base layer 4. In fact, these parts may extend all through base layer 4. This may provide a better attachment of the markings 5 to base layer 4. The insert 3 is produced in several injection moulding steps. First, the base layer 4 is formed. The base layer 3 has several injection openings 10 in the back surface. These injection openings 10 extend through the base layer 3 and discharge a the front surface. Through these injection openings 10 second material can be injected for forming at least part of the markings 5. In that way, the markings 5 are almost integrated in or with the base layer 3. Figure 4 shows a cross section through a part of a container wall 2 where an insert 3 is incorporated. The base layer 4 in this example is almost completely embedded in the material 26 of the wall 2. Furthermore, the surface of the markings 5 is in one plane with the surface of wall 2. In most embodiments, the material of the base layer 4 will blend with the moulding material of wall 2. At least most of the surface of the base layer 4 will mix with the material of wall 2. In this way, stress between these materials will be reduced to a minimum, even after rough uses like for instance in bottle crates.

Usually, bleeding or flashing can occur as the materials mix. The detrimental effects of this can be avoided by using a base layer 4 from material which does not have colour pigments or dyes. This, bleeding will not give visible effects. In another embodiment, the base layer has almost the same colour as the base material. This will also prevent visible effects from bleeding.

In another embodiment, the base layer 4 is so this that it can be called a foil. The foil will keep the markings 5 in place, but will hardly leave a trace of material in the crate wall. Thus, in fact the markings 5 will be almost directly incorporated into the wall's material.

In figure 4a, an embodiment already discussed above is illustrated. In this embodiment, the markings completely extend from the wall material 26. The upper or front surface of base layer 4 in this embodiment is in-plane with the rest of the wall material 26. This provides an appealing visual appearance because the markings 5 seem to come out of the surface (and in fact, they do!). Furthermore, melting of part of the markings during injection moulding of the wall material is avoided. Furthermore, mixing of material of the markings 5 with material from the wall 26 is prevented. Usually, these parts have different, even contrasting colours, making even the slightest mixing undesired.

In another example shown in figure 5, one step in the production of an insert having markings having several parts is demonstrated. In this embodiment, base layer 4 is produced in a separate injection moulding step. Next, a first part of a marking 5' is placed on the base layer 4. It can be snapped. In this embodiment, cooperating pins 12 and positioning holes 13 are used. In the embodiment, the marking part 5' has the pins 12, and the base layer 4 has the positioning holes. Other positioning means can be thought of. These means provided are simple and provide good and accurate positioning. In this embodiment, a central positioning hole is also used as injection opening, and it flares out in a larger opening below the first marking part 5'. This embodiment further has positioning cams 11 for holding and positioning the base layer 4, both during its production and its use.

In the embodiment of figure 5, a second marking part 5" is injection moulded onto the base layer 4 and underneath and around the first marking part 5'. The second marking part 5" will thus be visibly extending next to the first marking part 5'. Furthermore, it fixes or attaches the base layer 4 and the first marking part 5'. In figure 6, this is shown in cross section. In this embodiment, it is visible how the central positioning hole in fact is used as injection opening 10. The pins 12 can have distance parts for holding the first marking part 5' at a distance from base layer 4 in order to allow the material from the second marking part to flow underneath. In an embodiment, the pins 12 can have a thickened part preventing them to protrude further into positioning holes 13. It is also possible to provide other distance parts holding the first marking part 5' at a distance from base layer 4.

In figure 6, it is visible how part of the material of the second marking part 5' extends beyond the edges of the first marking, thus allowing it to form a visible second marking part 5". It can in fact provide a rim around the first marking part 5'.

The production method and embodiment of the insert using a first and second marking part 5', 5" (even allowing more distinguishing marking parts) makes it possible to make parts, for instance the first marking part 5", from a material which is more durable, high gloss, or scratch resistant than the rest of the insert. Furthermore, it can provide a very clear and crisp-looking marking which can stay that way, even after extensive use and rough handling. The base layer 4 at the back side is in this embodiment provided with pressing means 11. In this embodiment, on the back side of base layer 4, a set of projections 11 is provided. The use of these projections 11 will be explained below.

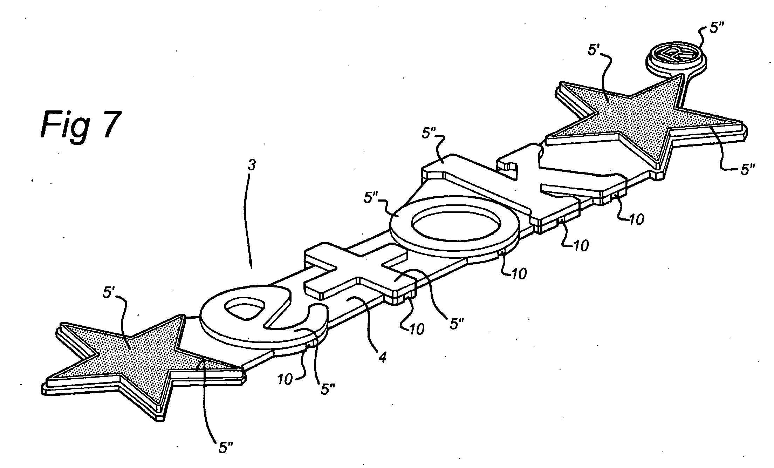

Figure 7 shows a complete insert 3 having a base layer, and markings 5 from first marking parts 5' and second marking parts 5". In this embodiment, the colour of the base layer 4, the first marking parts 5' and the second marking parts 5" differs. In fact, contrasting colours are used. In this embodiment, the base layer is green, the first marking part 5' is red, and the second marking part 5" is white. It now may also become clear why the injection opening underneath the ®-marking at the back side of the base layer 4 (see figure 3 below) is elongated. It is used for injection both the ®-marking and the second marking part 5" around the star. The markings "e, +, o, k" are injected from below in this embodiment using injection openings 10.

In order to avoid material stress between the material of the wall and the base layer 4 as much as possible, it was found that optimal results could be achieved when using materials with matching Melt flow indexes (MFI). In fact, when using materials with almost the same MFI gave the best results.

Production of the insert can be done in the following way. First, the base layer 4 is injection moulded. In one embodiment, a first marking part is placed upon the injection moulded base layer, this can be done in a robotised manner. Next, the base layer 4 with first marking part or parts 5' is placed in a second mould or mould part. In this mould or mould part, the second marking parts are injection moulded and cover the base layer and spaces between the base layer and the first marking part or parts 5' as indicated in the drawings.

The insert can be used in the following way. When it is desired that the markings stand out from the crate wall, the mould in which the crate is to be produced will have a cavity which is shaped in such a way that the markings 5 will at least partially fall within the cavity. The depth of the cavity or recess in the mould wall will be about the height of the markings 5 above the base layer 4. Around the markings, the mould wall with the cavity or cavities will press against the side of the base layer provided with the markings. In that way, the base layer together with the mould wall seal the markings from material to be injected for forming large part of the crate. If additional sealing of the markings is required, the mould wall may have a rim. Alternatively, the base layer may comprise a circumferential sealing lip or sealing ridge.

In production, one or more inserts will be placed in the mould with the markings in the cut away or recesses intended for the markings or part of the markings. Usually, the recess depth will be about equal to the height of the markings above the base layer. Next, the mould will close. If the insert is provided with the projections 11 of figure 6, these projections 11 may be designed in such a way that the total thickness of the base layer and projections 11 of the insert are larger than the width of the closed mould cavity. In this way the insert, and in particular the side of the base layer provided with the markings, will be pressed against the mould wall provided with the recess. This will provide positioning and sealing.

The present invention is applied to bottle crates made of plastic, usually thermoplastic material.

The present invention is based upon the insight that an element showing markings may advantageously be embedded in a container to provide markings that are resistant to abrasion, and that a much greater design freedom is achieved when the element is embedded in the container body itself.

It will be understood by those skilled in the art that the present invention is not limited to the embodiments illustrated above and that many modifications and additions may be made without departing from the scope of the invention as defined in the appending claims.

## Claims

1. A bottle crate comprising a container body (1) made of plastic material having a base and at least two side walls (2) extending from the base, wherein at least one of the side walls (2) is provided with a marking element showing markings (5), said marking element (5) being an insert (3) having a base layer (4), said base layer (4) being embedded in the container body while exposing at least the surface of the markings (5), wherein said markings (5) extend from the base layer (4) and are attached or integrated into said base layer (4), and wherein the container body and the base layer (4) are made of the same plastic material and comprise substantially the same colour pigments, **characterised in that**
the markings comprising a first marking part (5') and second marking parts (5"),
the base layer (4) is provided with holding means (11) on one side and the first marking part is positioned on the other side of said base layer (4) using cooperative positioning provisions on the base layer (4) and said first marking part (5'), for positioning said first marking part (5') on the base layer (4) and at a distance from said base layer (4), and **in that** said base layer (4) further comprises said second marking parts (5"), injection moulded on said other side of the base layer (4), via injection openings (10) through the base layer at the positions of said second marking parts.

2. A bottle crate according to claim 1, **characterised in that** the surface of the markings is in-plane with the surface of the side wall in which it is provided.

3. A bottle crate according to claim 1, **characterised in that** the markings (5) come out of the wall.

4. A bottle crate according to any of the preceding claims, **characterised in that** said second marking parts (5") are injection moulded to extend underneath said first marking part (5') for connecting it to the base layer (4).

5. A bottle crate according to claim 4, **characterised in that** said second marking parts (5") extend beyond the first marking part (5'), in particular at least partially surrounding it for providing a rim around the first marking part.

6. A bottle crate according to any of the preceding claims, **characterised in that** at least one marking element (5) indicates a brand, type and/or number.

7. A bottle crate according to any of the preceding claims, **characterised in that**, said container being injection moulded in a mould, the holding means (11) of the base layer of the marking element are arranged to cooperate with holding means provided on the mould wall.

8. A bottle crate according to any of the preceding claims, **characterised in that** the base layer (4) is in a first colour, part of the markings (5, 5') are in a second colour, said part of the markings extending from the surface of the base layer and injection material in a third colour different from the first and second colour is injected through provisions on said base layer (4) for producing at least part (5") of said markings.

## Patentansprüche

1. Flaschenkasten aufweisend einen aus Kunststoffmaterial hergestellten Behälterkörper (1) mit einer Basis und mindestens zwei Seitenwänden (2), die sich von der Basis aus erstrecken, wobei mindestens eine der Seitenwände (2) mit einem Markierungselement, das Markierungen (5) zeigt, versehen ist, wobei das Markierungselement (5) ein Einsatz (3) mit einer Basisschicht (4) ist, wobei die Basisschicht (4) in den Behälterkörper eingebettet ist, während mindestens die Oberfläche der Markierungen (5) exponiert ist, wobei sich die Markierungen (5) von der Basisschicht (4) aus erstrecken und an der Basisschicht (4) angebracht oder in sie integriert sind, und wobei der Behälterkörper und die Basisschicht (4) aus dem gleichen Kunststoffmaterial hergestellt sind und im Wesentlichen die gleichen Farbpigmente aufweisen, **dadurch gekennzeichnet, dass** die Markierungen einen ersten Markierungsteil (5') und zweite Markierungsteile (5") aufweisen,
die Basisschicht (4) mit Halteeinrichtungen (11) auf einer Seite bereitgestellt sind und der erste Markierungsteil auf der anderen Seite der Basisschicht (4) unter Verwendung von Eingriffs- und Positionierungsvorkehrungen auf der Basisschicht (4) und dem ersten Markierungsteil (5') zum Positionieren des ersten Markierungsteils (5') auf der Basisschicht (4) und in einem Abstand von der Basisschicht (4) positioniert ist,
und dadurch, dass die Basisschicht (4) weiterhin die zweiten Markierungsteile (5") aufweist, die auf der anderen Seite der Basisschicht (4) über Injektionsöffnungen (10) durch die Basisschicht hindurch an den Positionen der zweiten Markierungsteile spritzgegossen sind.

2. Flaschenkasten nach Anspruch 1, **dadurch gekennzeichnet, dass** die Oberfläche der Markierungen (5) in einer Ebene mit der Oberfläche der Seitenwand, liegt, in der sie bereitgestellt ist.

3. Flaschenkasten nach Anspruch 1, **dadurch gekennzeichnet, dass** die Markierungen (5) aus der Wand herauskommen.

4. Flaschenkasten nach einem der vorangehenden Ansprüche, **dadurch gekennzeichnet, dass** die zweiten Markierungsteile (5") so spritzgegossen sind, dass sie sich unterhalb des ersten Markierungsteils (5') erstrecken, um ihn mit der Basisschicht zu verbinden.

5. Flaschenkasten nach Anspruch 4, **dadurch gekennzeichnet, dass** sich die zweiten Markierungsteile (5") über den ersten Markierungsteil (5') hinaus erstrecken, dass sie ihn insbesondere so umgeben, dass mindestens teilweise ein Rand um den ersten Markierungsteil bereitgestellt wird.

6. Flaschenkasten nach einem der vorangehenden Ansprüche, **dadurch gekennzeichnet, dass** mindestens ein Markierungselement (5) eine Marke, einen Typ und/oder eine Nummer angibt.

7. Flaschenkasten nach einem der vorangehenden Ansprüche, **dadurch gekennzeichnet, dass**, wobei der Behälter in einer Form spritzgegossen ist, die Halteeinrichtungen (11) der Basisschicht des Markierungselements zum Zusammenwirken mit den auf der Formwand bereitgestellten Halteeinrichtungen angeordnet sind.

8. Flaschenkasten nach einem der vorangehenden Ansprüche, **dadurch gekennzeichnet, dass** die Basisschicht (4) in einer ersten Farbe vorliegt und ein Teil der Markierungen (5, 5') in einer zweiten Farbe vorliegt, wobei der Teil der Markierungen, der sich von der Oberfläche der Basisschicht aus erstreckt, und das Injektionsmaterial in einer dritten von der ersten und zweiten Farbe unterschiedlichen Farbe vorliegt, durch Vorkehrungen auf der Basisschicht (4) zur Herstellung von mindestens Teil (5") der Markierungen injiziert wird.

## Revendications

1. Caisse à bouteilles comprenant un corps de contenant (1) fait d'une matière plastique, présentant une base et au moins deux parois latérales (2) s'étendant à partir de la base, dans laquelle au moins une des parois latérales (2) est munie d'un élément de marquage présentant des marquages (5), ledit élément de marquage (5) étant une pièce rapportée (3) présentant une couche de base (4), ladite couche de base (4) étant encastrée dans le corps de contenant tandis qu'elle expose au moins la surface des marquages (5), dans laquelle lesdits marquages (5) s'étendent à partir de la couche de base (4) et sont fixés ou intégrés dans ladite couche de base (4), et dans laquelle le corps de contenant et la couche de base (4) sont faits de la même matière plastique et comprennent sensiblement les mêmes pigments colorés, **caractérisée en ce que** les marquages comprennent une première partie de marquage (5') et de secondes parties de marquage (5") la couche de base (4) est dotée de moyens de support (11) sur un côté et la première partie de marquage est positionnée de l'autre côté de ladite couche de base (4) au moyen de dispositions de positionnement sur la couche de base (4) et ladite première partie de marquage (5'), pour positionner ladite première partie de marquage (5') sur la couche de base (4) et à une distance de ladite couche de base (4),
et **en ce que** ladite couche de base (4) comprend en outre lesdites secondes parties de marquage (5"), moulées par injection sur ledit autre côté de la couche de base (4), par l'intermédiaire d'ouvertures d'injection (10) à travers la couche de base, aux positions desdites secondes parties de marquage.

2. Caisse à bouteilles selon la revendication 1, **caractérisée en ce que** la surface des marquages est dans le même plan que la surface de la paroi latérale dans laquelle elle est disposée.

3. Caisse à bouteilles selon la revendication 1, **caractérisée en ce que** les marquages (5) ressortent de la paroi.

4. Caisse à bouteilles selon l'une quelconque des revendications précédentes, **caractérisée en ce que** lesdites secondes parties de marquage (5") sont moulées par injection de sorte à s'étendre en dessous de ladite première partie de marquage (5') afin de la connecter à la couche de base (4).

5. Caisse à bouteilles selon la revendication 4, **caractérisée en ce que** lesdites secondes parties de marquage (5") s'étendent au delà de ladite première partie de marquage (5'), en particulier en l'entourant au moins partiellement de sorte à former un rebord autour de la première partie de marquage.

6. Caisse à bouteilles selon l'une quelconque des revendications précédentes, **caractérisée en ce qu'**au moins un élément de marquage (5) indique une marque, un type et/ou un nombre.

7. Caisse à bouteilles selon l'une quelconque des revendications précédentes, **caractérisée en ce que**, ledit contenant étant moulé par injection dans un moule, les moyens de support (11) de la couche de base de l'élément de marquage sont agencés de sorte à coopérer avec des moyens de support disposés sur la paroi du moule.

8. Caisse à bouteilles selon l'une quelconque des revendications précédentes, **caractérisée en ce que** la couche de base (4) est d'une première couleur, une partie des marquages (5, 5') est d'une deuxième couleur, ladite partie des marquages s'étendant à partir de la surface de la couche de base et un matériau d'injection d'une troisième couleur différente de la première et de la seconde couleur est injecté à travers des dispositions sur ladite couche de base (4) afin de produire au moins une partie (5") desdits marquages.
